# EUROPÄISCHE PATENTSCHRIFT

(11) **EP 1 709 869 B1**
(45) Veröffentlichungstag und Bekanntmachung des Hinweises auf die Patenterteilung: **05.10.2011**
(21) Anmeldenummer: 06006344.3
(22) Anmeldetag: 28.03.2006
(51) Int. Cl.: A01K 5/00

(54) **Vorrichtung zum Mischen und Verteilen von Schüttgütern**
Apparatus for mixing and distributing bulk products
Dispositif à mélanger et distribuer des produits en vrac

(30) Priorität: 09.04.2005 DE 102005016358
(43) Veröffentlichungstag der Anmeldung: 11.10.2006
(73) Patentinhaber: Bernard van Lengerich Maschinenfabrik GmbH & Co. KG, 48488 Emsbüren (DE)
(72) Erfinder: Van Lengerich, Bernard, 48488 Emsbüren (DE); Altgilbers, Bernhard, 48488 Emsbüren (DE)
(74) Vertreter: Pott, Ulrich

(56) Entgegenhaltungen:
- EP-A- 0 404 028
- EP-A- 0 875 135
- GB-A- 2 008 373

## Beschreibung

Die Erfindung bezieht sich auf eine Vorrichtung zum Mischen und Verteilen von Schüttgütern, insbesondere von kurz- und langfasrigem Silagegut, mit einem Behälter zur Aufnahme von Schüttgut, der vorzugsweise ein in eine Rotationsbewegung versetzbares Förder- und Mischelement sowie zumindest eine Austragöffnung aufweist.

Vorrichtungen zum Mischen und Verteilen von Schüttgütern der vorgenannten Art sind allgemein bekannt. So sind sie beispielsweise in einer Ausgestaltung als Futtermischwagen bekannt, bei dem innerhalb eines Behälters eine stehende Welle angeordnet ist. Das fasrige Silagegut wird von oben in den Behälter eingegeben, von der Verteilwelle erfasst, bearbeitet und dann einer Austragöffnung zugeführt, der ein Förderband zum Ausbringen des bearbeiteten Silagegutes in einen Futtergang nachgeordnet ist.

In vielen Anwendungsfällen steht jedoch ein derartiger Futtergang nicht zur Verfügung. Vielmehr sind Anwendungsfälle vorhanden, wo Stalleinbauten es erforderlich machen, das eingefüllte Gut über ein Hindernis hinweg auszubringen, was mit den bekannten Futtermischwagen nicht möglich ist.

Aus der EP-A-0 404 028 ist eine Vorrichtung der eingangs genannten Art bekannt, bei der zusätzlich eine Gebläsevorrichtung mit einem Auswurfelement vorgesehen ist, um Futter auszubringen. Diese ist über einen Kanal mit dem Behälterinneren verbunden, womit das Risiko einhergeht, dass es in diesem Kanal zu Verstopfungen kommt.

Aus der EP-A-0 875 135 ist ein Gebläse zum Fördern stark schleißender Blasgüter bekannt, insbesondere zum pneumatischen Ausbringen von Halm- oder Schüttgütern, wobei ein Flügel-Förderrad Halteprofilierungen oder Haltevertiefungen zur Bildung eines Blasgut-Materialpolster aufweist und wobei das Flügel-Förderrad und das ihm zugeordnete Drucklüfterlaufrad auf einer gemeinsamen, etwa horizontal orientierten Rotorwelle angeordnet sein können. Ein Ende der Rotorwelle kann mit einem Riemengetriebe oder dergleichen Untersetzungsgetriebe in Antriebsverbindung stehen, dessen Getriebeeingang mit einem Antriebsmotor oder mit der Zapfwelle einer landwirtschaftlichen Zugmaschine verbunden sein kann. Auch hierbei ist nachteilig, dass das Gebläse über Kanäle und dergleichen mit zu befüllen ist. Des weiteren sind zum Antrieb Rotorwellengetriebe und dergleichen vorzusehen, so dass dieser Antrieb sich nur schwerlich an geometrische Verhältnisse von z.B. einem Silagegutbehälter anpassen lässt.

Es ist Aufgabe der vorliegenden Erfindung, eine Vorrichtung zum Mischen und Verteilen von Schüttgütern der eingangs genannten Art zu schaffen, bei der Füllgut auch über ein Hindernis hinwegbewegt ausgebracht werden kann und wobei die dafür vorgesehenen Mittel in baulich einfacher und kostengünstiger Weise vorgesehen werden können. Darüber hinaus soll das Risiko von Verstopfungen minimiert sein. ist und in antriebstechnisch einfacher Weise an einer z.B. auch schräg stehenden Behälterwandung angebracht werden kann.

Zur Lösung dieser Aufgabe zeichnet sich die Vorrichtung zum Mischen und Verteilen von Schüttgütern der eingangs genannten Art dadurch aus, dass der Gebläsevorrichtung einem Riemenantrieb zugeordnet und die Gebläsevorrichtung als Sauggebläse und an einer Behälterwandung des Behälters angeordnet ist, wobei der Riemen des Riemenantriebs über eine Spannrolle spannbar ist und wobei die Gebläsevorrichtung in Schräganordnung in einer geneigt ausgerichteten Behälterwandung des Behälters angeordnet ist.

Damit ist eine Vorrichtung zum Mischen und Verteilen von Schüttgütern, insbesondere auch ein Futtermischwagen zur Verfügung gestellt, bei der die Gebläsevorrichtung direkt der Austragöffnung zugeordnet werden kann und dabei auch in Schrägausrichtung von z.B. Behälterseitenwänden sich nicht störend auswirken, da eine durchgehende Gelenkwelle für die Gebläsevorrichtung vorgesehen werden kann, die von dem Riemenantrieb anzutreiben ist. Dies ist zu vollziehen ohne das Erfordernis teurer Kupplungen und Freilaufgetriebe, wobei auch ohne weiteres z.B. Schrägausrichtungen von Behälterseitenwänden in der Größenordnung von z.B. 20° mit Direktanflanschung einer Gebläsevorrichtung zu realisieren sind. Ansonsten könnten über Gelenkwellen derartige Winkelanordnungen nicht aufgenommen werden, ohne eine Zerstörung von Antriebswellen befürchten zu müssen.

Da das Gebläse direkt an auch eine schräg stehende Behälterseitenwand angeflanscht werden kann, sind besondere Verbindungskanäle entbehrlich. Dadurch ist das Verstopfungsrisiko minimiert.

Bevorzugterweise ist der Riemen des Riemenantriebes im Nichtantriebsbetrieb auf Schlupf zu halten. Dieser ist bevorzugtermaßen um zwei Antriebsumlenkrollen geführt, die das auszugleichende Winkelversatzmaß aufweisen können. Über eine Spannrolle kann der auf Schlupf gehaltene Riemen gespannt werden für eine Zuschaltung des Antriebes der Gebläsevorrichtung, wobei ein entsprechender Winkelversatz von den Antriebsumlenkrollen des Riemenantriebs über den Riemen auszugleichen sind. Dies kann ohne das Risiko des Zerstörens von Getriebeteilen und Antriebsteilen erfolgen.

Die Spannrolle kann über motorische, pneumatische oder elektrische Stellglieder aktiviert werden. An die Gebläsevorrichtung kann sich direkt ein z.B. schwenkbarer Auswurfkrümmer als Auswurfelement anschließen, so daß in baulich einfacher Weise mit den vorgesehenen Zusatzaggregaten Schüttgut über die Austragöffnung auch über Hindernisse hinweg weiter befördert werden kann. Zweckmäßig ist es, der Austragöffnung und damit der Gebläsevorrichtung zum Behälterinneren hin eine Ansaughaube zuzuordnen, die eine Öffnung zum Boden des Behälters aufweist und ansonsten verschlossen ist. Dadurch kann Schüttgut nur vom Bodenbereich des Behälters angesaugt werden, so daß sichergestellt ist, daß z.B. von oben aufgegebenes Schüttgut zunächst ein Förder- und Mischwerkzeug hindurchlaufen muß, bevor es in den Bereich der Austragöffnung gelangt.

Hinsichtlich wesentlicher weiterer Ausgestaltungen wird auf weitere Unteransprüche, die nachfolgende Beschreibung und die Zeichnung verwiesen. In der Zeichnung zeigen:
- Fig. 1: eine schematische Querschnittsdarstellung eines Ausführungsbeispiels nach der Erfindung, und
- Fig. 2: vergrößert den Antrieb der Gebläsevorrichtung nach dem Ausführungsbei- spiel nach Fig. 1 mit der zugeordneten beweglichen Spannrolle.

Die Vorrichtung zum Mischen und Verteilen von Schüttgütern ist in dem veranschaulichten Ausführungsbeispiel als Futtermischwagen 1 mit einer Zugdeichsel 2, Rädern 3 und einem Fahrgestell 4 ausgebildet. Dieser Futtermischwagen hat einen Behälter 5, in dessen Innerem eine senkrecht stehende Förderwelle 6 als Misch- und Verteilwerkzeug vorgesehen ist. Im rückwärtigen Bereich des Behälters ist eine allgemein mit 7 bezifferte Austragöffnung vorgesehen, der eine Gebläsevorrichtung 8 zugeordnet ist. Diese Gebläsevorrichtung 8 ist an die Außenwandung des Behälters 5 adaptiert und hat ein Gebläserad 10, das von einem Keilriemenantrieb 11 anzutreiben ist. Mittels einer Spannrolle 12 ist dieser Keilriemen vorzuspannen, so daß der ansonsten auf Schlupf gehaltene Keilriemen 11 die Schrägausrichtung der Eingangswelle 8.1 der Gebläsevorrichtung 8 antriebswirksam mitmachen kann.

Im Inneren des Behälters 5 ist die Austragöffnung 7 von einer Ansaughaube 13 bedeckt, die eine nach unten weisende Öffnung 14 aufweist. Die Querschnittsfläche dieser Ansaughaube 13 ist im Hinblick auf die Querschnittsfläche des Gebläseeintritts optimiert, um möglichst effektiv eingefülltes Silagegut zu erfassen und ausbringen zu können. Das Auswurfelement 15, das in den genannten Ausführungsbeispiel als Auswurfkrümmer vorgesehen ist, kann beispielsweise auch schwenkbar ausgebildet sein. Ansonsten verschließt die Haube 13 die Austragöffnung 7 des Behälters 5 vollständig. Durch die allein untere Öffnung ist es beispielsweise auch nicht möglich, daß beispielsweise irrtümlich in den Behälter 5 gelangte Werkzeuge, Stiele u.dgl. in die Gebläseöffnung gelangen können.

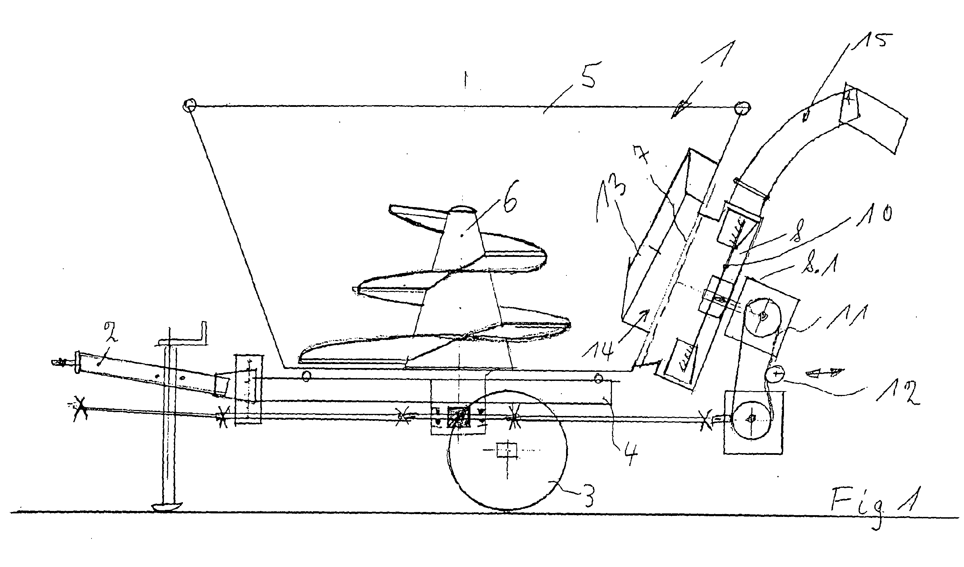

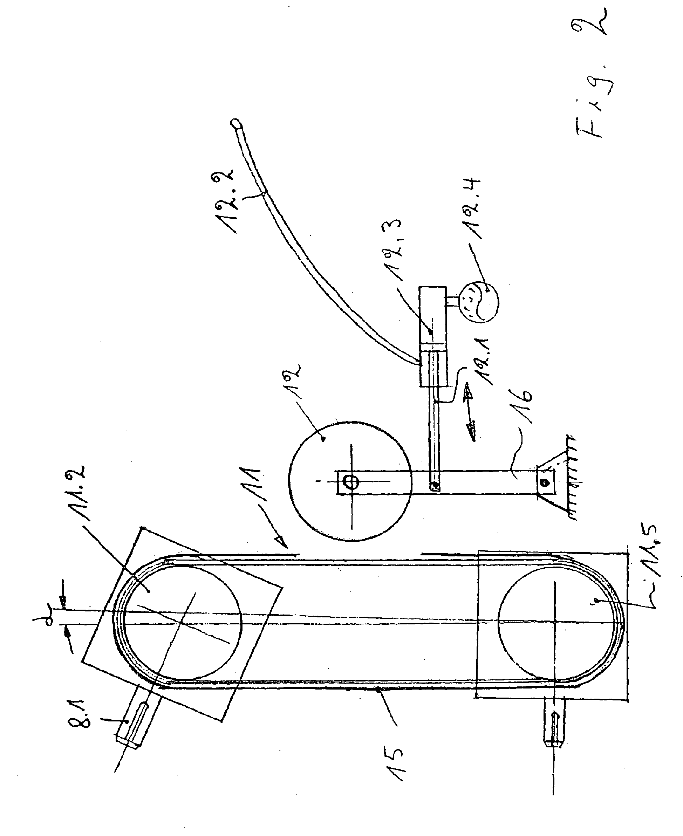

Wie im einzelnen näher aus Fig. 2 hervorgeht, hat der Keilriemenantrieb 11 zwei Antriebsumlenkrollen 11.1 und 11.2, der von einem Gehäuseblech 15 bedeckt ist. Über einen Stellantrieb 12.1 ist über eine Schlepperhydraulikleitung 12.2 der Stellzylinder 12.3 mit Ausgleichsbehälter 12.4 zu aktivieren. Die Spannrolle ist an einem Schwenkhebel 16 an den Riemenantrieb 11 heranzubewegen. Der ansonsten auf Schlupf gehaltene Riementrieb 11 wird dabei vorgespannt (wie in Fig. 1 dargestellt), so daß die Antriebsbewegung auf die Gebläsevorrichtung 8 zu übertragen ist. Die Antriebsumlenkrollen 11.1 und 11.2 sind daher relativ zueinander mit einem Winkelversatzmaß 11 vorgesehen, so daß sich insofern die sich durch die Schrägausrichtung der Behälterwandung des Behälters 5 und die direkte Adaption der Gebläsevorrichtung 8 an dieser Behälterwandung des Behälters 5 bedingte Schrägausrichtung der Gebläsevorrichtung durch den Keilriementrieb in baulich einfacher Weise ausgleichen läßt. Durch die Schlupfanordnung sind teure Freilaufgetriebe, Kupplungen u.dgl. entbehrlich.

## Patentansprüche

1. Vorrichtung zum Mischen und Verteilen von Schüttgütern, insbesondere von kurz- und langfaserigem Silagegut, mit einem Behälter (5) zur Aufnahme von Schüttgut, der vorzugsweise ein in eine Rotationsbewegung versetzbares Förder- und Mischelement (6) sowie zumindest eine Austragöffnung (7) aufweist, wobei der Austragöffnung (7) eine Gebläsevorrichtung (8) zugeordnet ist, **dadurch gekennzeichnet, dass** der Gebläsevorrichtung (8) einem Riemenantrieb (11) zugeordnet und die Gebläsevorrichtung als Sauggebläse und an einer Behälterwandung des Behälters angeordnet ist, wobei der Riemen des Riemenantriebs (11) über eine Spannrolle (12) spannbar ist und wobei die Gebläsevorrichtung (8) in Schräganordnung in einer geneigt ausgerichteten Behälterwandung des Behälters angeordnet ist.

2. Vorrichtung nach Anspruch 1, **dadurch gekennzeichnet, dass** die Gebläsevorrichtung (8) eine geneigt zur Horizontalen ausgerichtete Antriebswelle 8.1 aufweist, die einenends eine von dem Riemen antreibbare Antriebsrolle (11.2) aufweist.

3. Vorrichtung nach Anspruch 1 oder 2, **dadurch gekennzeichnet, dass** die Spannrolle (12) beweglich gehaltert und zu dem Riemen hin- und von diesem wegbewegbar ist.

4. Vorrichtung nach Anspruch 3, **dadurch gekennzeichnet, dass** die Spannrolle (12) schwenkbeweglich gehaltert und über einen motorisch, pneumatisch, oder hydraulisch aktivierbares Stellglied (12.1) verschwenkbar ist.

5. Vorrichtung nach einem der Ansprüche 1 bis 4, **dadurch gekennzeichnet, dass** der Riemen des Riemenantriebs (11) von der Spannrolle (12) unbeaufschlagt auf Schlupf vorgesehen ist und unter Last ein- und ausschaltbar ist.

6. Vorrichtung nach einem der Ansprüche 1 bis 5, **dadurch gekennzeichnet, dass** der Gebläsevorrichtung (8) eine zum Behälterinneren hin offene Ansaughaube (13) vorgeordnet ist.

7. Vorrichtung nach Anspruch 6, **dadurch gekennzeichnet, dass** die Ansaughaube (13) eine zum Boden des Behälters hin offene Zuführöffnung (14) aufweist und ansonsten geschlossen ausgebildet ist.

8. Vorrichtung nach einem der Ansprüche 1 bis 7, **dadurch gekennzeichnet, dass** die Gebläsevorrichtung (8) mit einem Auswurfelement (15) verbindbar ist.

9. Vorrichtung nach einem der Ansprüche 7 bis 8, **dadurch gekennzeichnet, dass** die Ansaughaube (13) aus dem Behälterinneren nach außen verschwenkbar gehaltert ist

## Claims

1. Apparatus for mixing and distributing bulk materials and in particular short and long-fibred silage, having a container (5) to hold bulk material which preferably has a feeding and mixing member (6) which can be caused to perform a rotary movement, and at least one outlet opening (7), the outlet opening (7) having a fan device (8) associated with it, **characterised in that** the fan device (8) has a belt drive (11) associated with it and the fan device (8) is arranged to form a suction fan and is arranged on one wall of the container, the belt of the belt drive (11) being able to be tensioned by means of a tensioning roller (12) and the fan device (8) being arranged in an inclined position in a wall of the container which is aligned at an inclination.

2. Apparatus according to claim 1, **characterised in that** the fan device (8) has a drive shaft (8.1) which is aligned at an inclination to the horizontal and which has at one end a drive pulley (11.2) able to be driven by the belt.

3. Apparatus according to claim 1 or 2, **characterised in that** the tensioning roller (12) is mounted in such a way as to be movable and can be moved towards and away from the belt.

4. Apparatus according to claim 3, **characterised in that** the tensioning roller (12) is mounted in such a way as to be movable by pivoting and can be pivoted by means of a positioned member (12.1) able to be actuated pneumatically, hydraulically or by motor means.

5. Apparatus according to one of claims 1 to 4, **characterised in that** the belt of the belt drive (11) is intended to slip when the tensioning roller (12) is not applied to it and can be switched in and out under load.

6. Apparatus according to one of claims 1 to 5, **characterised in that** the fan device (8) has positioned upstream of it an intake structure (13) which is open towards the interior of the container.

7. Apparatus according to claim 6, **characterised in that** the intake structure (13), while having an infeed opening (14) which is open towards the floor of the container, is otherwise not of an open form.

8. Apparatus according to one of claims 1 to 7, **characterised in that** the fan device (8) can be connected to a discharge member (15).

9. Apparatus according to either of claims 7 and 8, **characterised in that** the intake structure (13) is mounted in such a way as to be pivotable outwards from the interior of the container.

## Revendications

1. Dispositif pour mélanger et distribuer des produits en vrac, notamment des produits d'ensilage à fibres courtes et longues comprenant :
- un réceptacle (5) recevant le produit en vrac et équipé de préférence d'un élément de transfert et de mélange (6) mis en rotation et d'au moins un orifice de sortie (7),
- l'orifice (7) étant combiné à une machine soufflante (8),
dispositif **caractérisé en ce que**
- la machine soufflante (8) comporte un entraînement par courroie (11) et elle est réalisée comme soufflante aspirante installée sur la paroi du réceptacle,
- la courroie de l'entraînement à courroie (11) est tendue par un galet tendeur (12), et
- la machine soufflante (8) est installée suivant un montage en biais sur une paroi inclinée du réceptacle.

2. Dispositif selon la revendication 1,
**caractérisé en ce que**
la machine soufflante (8) a un arbre d'entraînement (8.1) incliné par rapport à la direction horizontale, et dont une extrémité porte une poulie (11.2) entraînée par la courroie.

3. Dispositif selon la revendication 1 ou 2,
**caractérisé en ce que**
le galet tendeur (12) est monté mobile pour se rapprocher ou s'écarter de la courroie.

4. Dispositif selon la revendication 3,
**caractérisé en ce que**
le galet tendeur (12) est tenu de manière mobile en pivotement et il est pivoté par un actionneur (12.1) à moteur pneumatique ou hydraulique.

5. Dispositif selon l'une des revendications 1 à 4,
**caractérisé en ce que**
la courroie de l'entraînement à courroie (11) tourne en patinant lorsqu'elle n'est pas sollicitée par le galet tendeur (12) et elle peut être mise en oeuvre ou arrêtée en charge.

6. Dispositif selon l'une des revendications 1 à 5,
**caractérisé en ce que**
la machine soufflante (8) comporte une hotte aspirante (13) ouverte en direction de l'intérieur du réceptacle.

7. Dispositif selon la revendication 6,
**caractérisé en ce que**
la hotte d'aspiration (13) comporte un orifice d'alimentation (14) ouvert en direction du fond du réceptacle, la hotte étant par ailleurs fermée.

8. Dispositif selon l'une des revendications 1 à 7,
**caractérisé en ce que**
la machine soufflante (8) est reliée à un élément d'éjection (15).

9. Dispositif selon l'une des revendications 7 à 8,
**caractérisé en ce que**
la hotte (13) est tenue de manière à pouvoir basculer vers l'extérieur à partir de l'intérieur du réceptacle.
